# EUROPEAN PATENT APPLICATION

(11) **EP 0 667 705 A1**
(43) Date of publication of application: **16.08.1995**
(21) Application number: 95300901.6
(22) Date of filing: 14.02.1995
(51) Int. Cl.: H04N 1/405

(54) **Method and apparatus for generating a screened reproduction of an image**

(30) Priority: 14.02.1994 IL 10864394
(71) Applicant: SCITEX CORPORATION LTD., Herzliya 46103 (IL)
(72) Inventor: Tirosh, Limor, Tel Aviv 64374 (IL); Weiss, Alex, Netanya 42345 (IL)
(74) Representative: Hillier, Peter

(57) **Abstract**

This invention discloses a method for generating a screened reproduction of an image comprising the steps of providing a representation of an original having input density values representing the grey levels of various locations of the original for a given color,defining screen segments in a line by line fashion, wherein each screen segment is a line whose length and location is determined in a random manner and employing the input density values of the original and to determine what percentage of each screen segment is to be marked.

## Description

### FIELD OF THE INVENTION

The present invention relates to screened image reproduction and more particularly to a method and apparatus for electronically generating a screened reproduction of an image.

### BACKGROUND OF THE INVENTION

Electronic screening for image reproduction is well known in the art. According to a well known technique described in U.S. Patent 4,456,924 of the present assignee, for each screened dot, a multiplicity of coordinates of a laser plotter are translated into screen-cell coordinates. A corresponding cell memory is preloaded by threshold values, defining a cell memory matrix. Input digitized scanned density values of an image, such as a color separation, are compared with the threshold values, cell by cell. The results provide an on/off control input for a laser plotter.

U.S. Patent 4,149,183 describes an electronic halftone generator wherein a halftone signal is generated by pulse width modulating or comparing the scanned or video signal with a periodic analog signal having two frequencies and phases to create a dot pattern output which is a function of the frequency and phase of the two combined modulating signals. The halftone reproduction generated has variable dot configurations that are controllable to enable both rotation of the dot pattern and geometric modifications of the dot pattern.

U.S. Patent 5,079,721 of the present assignee/applicant describes apparatus and a technique for generating a screened reproduction of an image comprising the steps of providing a representation of an original having input density values representing the grey levels of various locations of the original for a given color separation, defining a desired screen dot arrangement for the image, writing screen dots in a line by line fashion, wherein each screen dot is made up of a plurality of lines whose length and location determines the dot configuration and whose length and location is determined by an analog operation employing the input density values of the original and the desired screen dot arrangement.

U.S. Patent 4,040,094 describes a method and apparatus for electronic screening of a graphic image to be reproduced by printing. The density of the graphic image is determined repetitively during the digital generation of each dot which will form a part of the half-tone image when produced, and the dot is modified according to changes in the density. Thus the structure of any halftone dot may be modified during its construction.

### SUMMARY OF THE INVENTION

The present invention seeks to provide an improved technique for generating a screened reproduction of an image.

There is thus provided in accordance with a preferred embodiment of the present invention a method for generating a screened reproduction of an image including the steps of:
providing a representation of an original having input density values representing the grey levels of various locations of the original for a given color;
defining screen segments in a line by line fashion, wherein each screen segment is a line whose length and location is determined in a random manner; and
employing the input density values of the original and to determine what percentage of each screen segment is to be marked.

There is also provided in accordance with a preferred embodiment of the present invention apparatus for generating a screened reproduction of an image including:
apparatus for providing a representation of an original having input density values representing the grey levels of various locations of the original for a given color;
a random screen segment definer for defining screen segments in a line by line fashion, wherein each screen segment is a line whose length and location is determined in a random manner; and
a marking controller employing the input density values of the original and to determine what percentage of each screen segment is to be marked.

### BRIEF DESCRIPTION OF THE DRAWINGS

The present invention will be more fully understood and appreciated from the following detailed description, taken in conjunction with the drawings in which:
Fig. 1 is a simplified pictorial block diagram illustration of a process color printing system constructed and operative in accordance with a preferred embodiment of the present invention;
Fig. 2 is an illustration of pixel-by-pixel input density values for a small portion of a color separation;
Figs. 3A, 3B and 3C are illustrations of three different, randomly generated screen line segments each representing the same input density;
Figs. 4A, 4B and 4C are illustrations of three different, randomly generated screen line segments each representing a different input density;
Figs. 5A and 5B are illustrations of parts of two screens constructed and operative in accordance with two alternative embodiments of the invention; and
Fig. 6 is a simplified block diagram illustration of a screen generator constructed and operative in accordance with a preferred embodiment of the present invention.

### DETAILED DESCRIPTION OF A PREFERRED EMBODIMENT

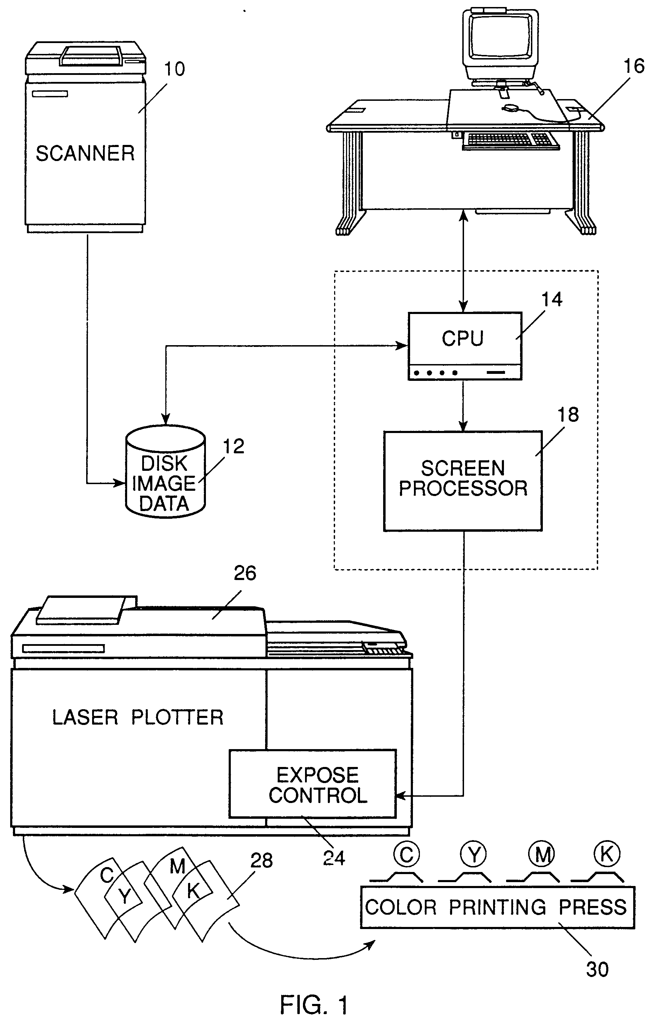

Reference is now made to Fig. 1, which illustrates a system for generating a screened reproduction of an image constructed and operative in accordance with a preferred embodiment of the present invention. The system preferably comprises a color separation scanner 10, such as a Scitex Smart Scanner, manufactured and sold by Scitex Corporation Ltd. of Herzlia, Israel, which is adapted to provide a digital color separation output of a color original.

The digital output of scanner 10 is normally stored on an image data disk 12 or any other suitable storage medium, which is accessible by a CPU 14, such as an Intel 80386. Interfacing with the CPU 14 is an interactive workstation 16, such as a Scitex Prisma, manufactured and sold by Scitex Corporation Ltd. of Herzlia, Israel.

CPU 14 interfaces with screen generation circuitry 18, which in turn provides a control output to laser beam control circuitry 24 in a laser plotter 26, such as a Dolev, manufactured and sold by Scitex Corporation Ltd. of Herzlia, Israel.

Laser plotter 26 produces halftone film color separations 28 which are employed in a conventional process color printing press 30, to produce process color prints.

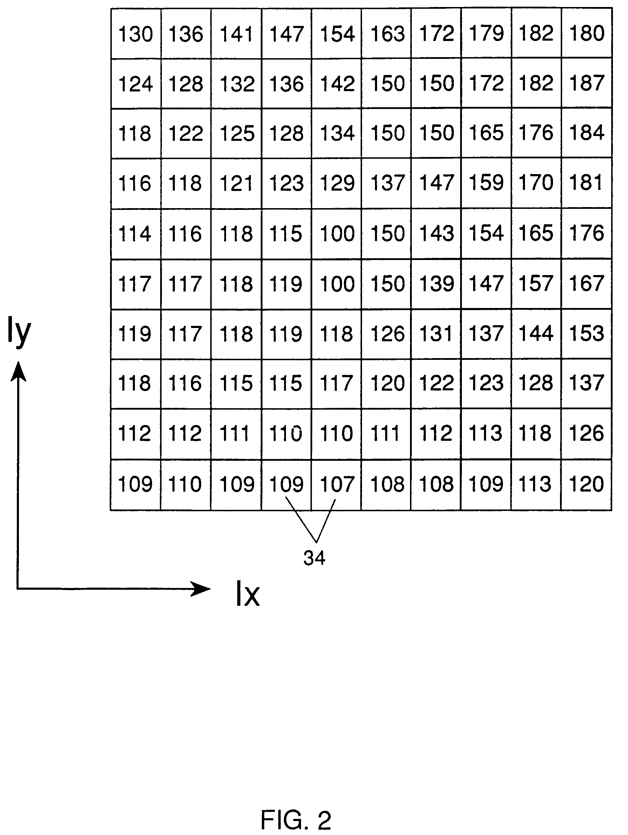

Referring now to Fig. 2, in a typical halftone color separation which may be stored on disk 12, the gray level varies thereacross. The halftone color separation in general is hereinafter termed the input image and is divided into a first multiplicity of pixels 34 which are arranged along coordinate axes Iₓ and I_{y}. Pixels 34 typically have a resolution of 100 - 400 pixels per inch along each of the coordinate axes of the input image.

Each average gray level for a pixel 34 is represented digitally in Fig. 2 by an input density level. There are typically provided 256 different input density levels, 0 being the lightest and 255 being the blackest.

In accordance with a preferred embodiment of the invention, and in contrast with the prior art, an irregular screen function is employed for screening the image. The use of this irregular screen function avoids undesired visual effects which sometimes occur when regular screen functions are employed, as in the prior art. Such undesired visual effects include periodic artifacts on a single screen color separation as well as periodic artifacts which arise when multiple screens are superimposed upon each other.

In accordance with a preferred embodiment of the present invention, the irregular screen function is generated by the following steps:
defining screen segments in a line by line fashion, wherein each screen segment is a line whose length and location is determined in a random manner; and
employing the input density values of the original and to determine what percentage of each screen segment is to be marked.

References throughout the specification and claims to "random" are intended to cover both random and pseudorandom.

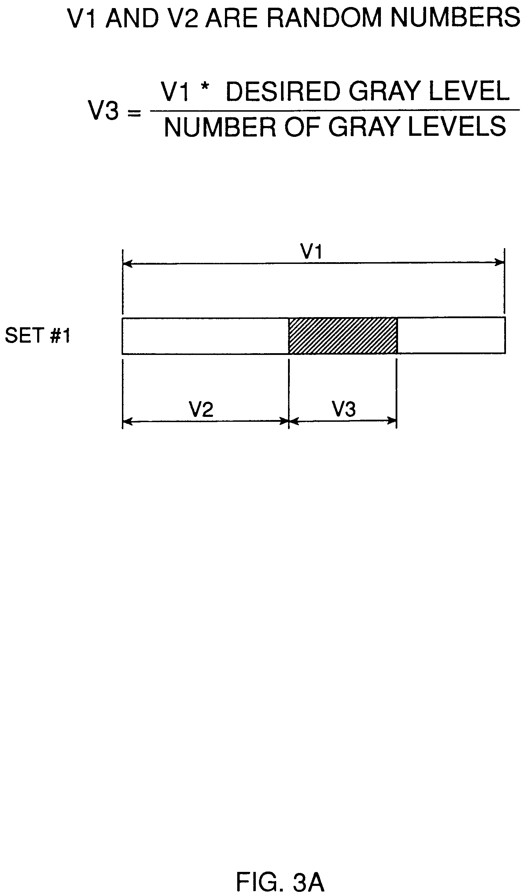

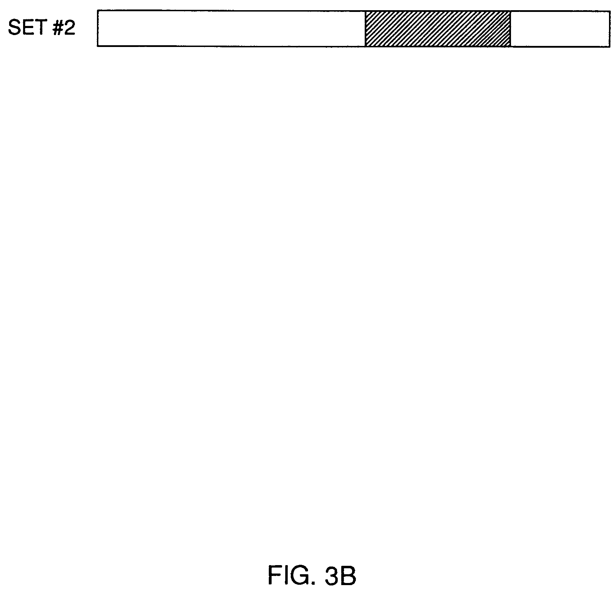

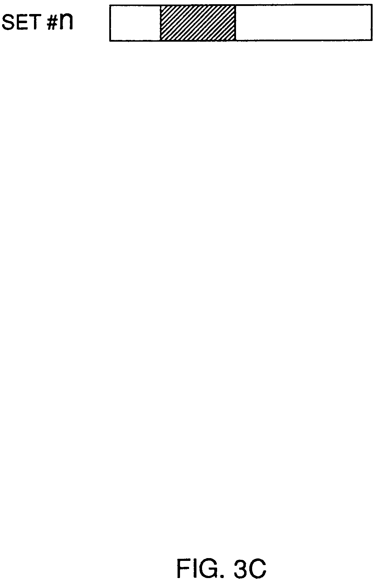

Figs. 3A, 3B and 3C are illustrations of three different, randomly generated screen line segments each representing the same input density. It is seen that the length of each segment is not the same, inasmuch as the lengths are randomly generated. The percentage of the length that is marked, is identical in each case, inasmuch as each of the segments represents the same input density.

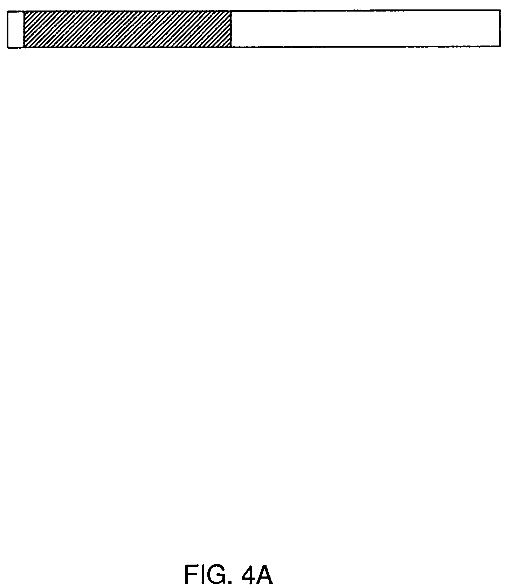

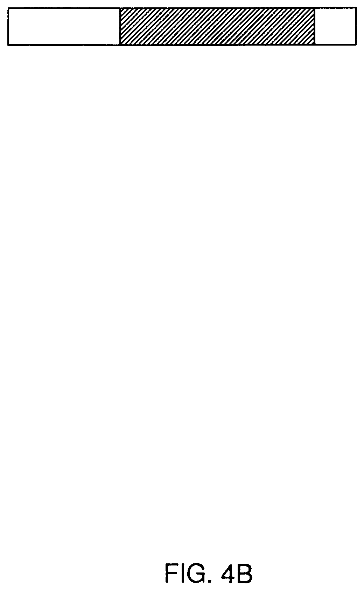

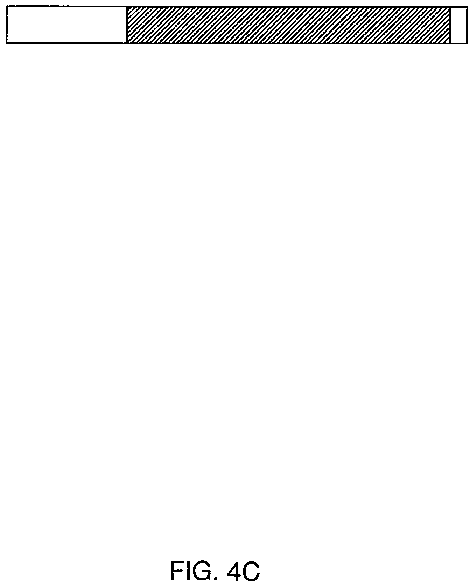

Figs. 4A, 4B and 4C are illustrations of three different, randomly generated screen line segments each representing a different input density. It is seen that the length of each segment is not the same, inasmuch as the lengths are randomly generated. The percentage of the length that is marked, is also not identical. In each case, the percentage of the length that is marked corresponds to the input density of the region underlying that segment.

For example, the segments illustrated in Figs. 4A, 4B and 4C may represent respective input densities 107, 143 and 182, appearing in Fig. 2.

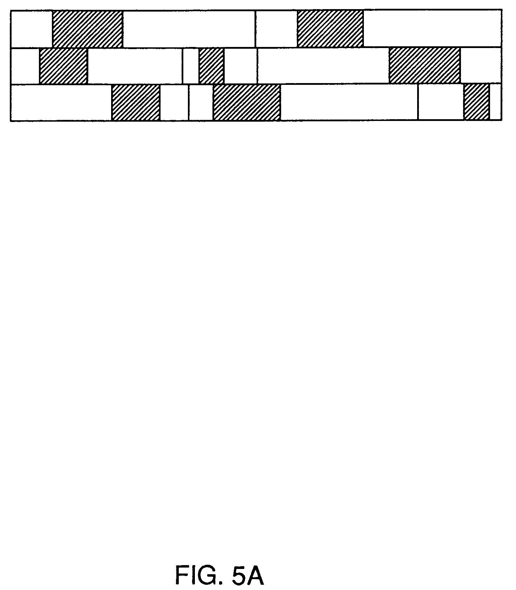

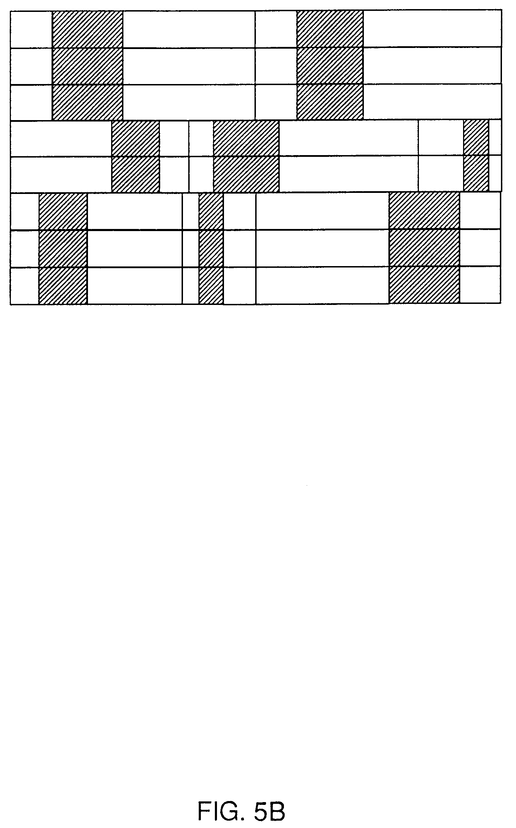

Reference is now made to Figs. 5A and 5B, which are illustrations of parts of two screens constructed and operative in accordance with two alternative embodiments of the invention. Fig. 5A illustrates a screen made up of individual segments of the type illustrated in Figs. 3A - 3C and 4A - 4C. It is appreciated that in the screen of Fig. 5A, there may appear marked regions which are relatively small, so small so as to be unprintable.

If it is desired to avoid the possible existence of undesirably small marked regions, each line of the screen may be multiplied a selected number of times, so as to ensure that the smallest marked regions are at least a certain length in a direction perpendicular to the scanning line. Such an arrangement is shown in Fig. 5B.

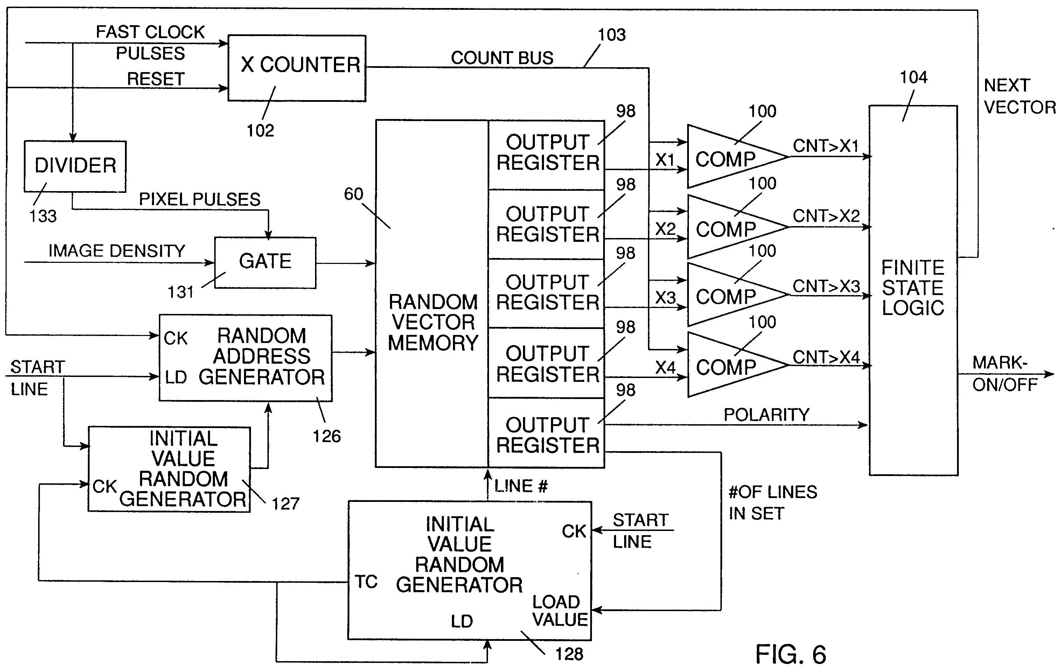

Reference is now made to Fig. 6, which is a simplified block diagram illustration of a screen generator constructed and operative in accordance with a preferred embodiment of the present invention.

A random vector memory 60 contains a multiplicity of randomly selectable line segments for each of all 256 input density levels. The contents of memory 60 are a collection of line segments of the type illustrated in Figs. 3A - 3C having a percentage of marking appropriate for each input density. Memory 60 may also store a selected number which represents the number of times each line is repeated, as in the screen of Fig. 5B. Memory 60 outputs information as to marking start and stop locations along the X axis via a plurality of output registers 98 to a plurality of comparators 100.

Memory 60 is addressed by a random address generator 126 which receives inputs from an initial value random generator 127. The initial value random generator 127 receives a start line input indicating the beginning of a line of a screen and an input from a counter 128. Generator 127 and counter 128 are used to effect desired multiplication of lines in the screen as illustrated in Fig. 5B.

A divider 133 receives fast clock pulses and divides them into pixel pulses whose purpose it is to synchronize the input density information with the writing operation. The pixel pulses are supplied to a gate 131 which controls the supply of input density information to memory 60.

An X counter 102 indicates the location of the writing head along the segment and is reset each time a new segment is begun. When the counter 102 reaches a location wherein the marking status of the plotter is to be changed in accordance with the input density, appropriate signals are sent along a count bus 103 to comparators 100.

The count output received by comparators 100 represents a current abscissa value. Comparators 100 compare the abscissa values X₁ and X₂ with the current abscissa value. Counter 102 is preferably fed by fast clock pulses that are synchronized with the motion of the laser beam of the laser plotter 26 (Fig. 1). Accordingly, the output of the counter always represents the abscissa of the beam location along the scan line.

Based on the comparison carried out by comparators 100, suitable ON/OFF signals are provided by finite state logic circuitry 104 to the laser beam control circuitry 24 of the laser plotter 26.

The output of finite state logic 104 is also supplied to random address generator 126 and to X counter 102 to indicate the completion of a given segment and initiate the production of a further segment.

It will be appreciated by persons skilled in the art that the present invention is not limited by what has been particularly shown and described hereinabove. Rather the scope of the present invention is defined only by the claims which follow:

## Claims

1. A method for generating a screened reproduction of an image comprising the steps of:
providing a representation of an original having input density values representing the grey levels of various locations of the original for a given color;
defining screen segments in a line by line fashion, wherein each screen segment is a line whose length and location is determined in a random manner; and
employing the input density values of the original and to determine what percentage of each screen segment is to be marked.

2. Apparatus for generating a screened reproduction of an image comprising:
apparatus for providing a representation of an original having input density values representing the grey levels of various locations of the original for a given color;
a random screen segment definer for defining screen segments in a line by line fashion, wherein each screen segment is a line whose length and location is determined in a random manner; and
a marking controller employing the input density values of the original and to determine what percentage of each screen segment is to be marked.
